# EUROPEAN PATENT SPECIFICATION

(11) **EP 0 458 460 B1**
(45) Date of publication and mention of the grant of the patent: **23.06.1999**
(21) Application number: 91303577.0
(22) Date of filing: 22.04.1991
(51) Int. Cl.: H04N 3/15

(54) **Photoelectric conversion apparatus**
Photoelektrische Wandlungsvorrichtung
Appareil de conversion photo-électrique

(30) Priority: 23.04.1990 JP 10518190; 23.04.1990 JP 10518290
(43) Date of publication of application: 27.11.1991
(73) Proprietor: CANON KABUSHIKI KAISHA, Tokyo (JP)
(72) Inventor: Ueno, Isamu c/o Canon Kabushiki Kaisha, Ohta-ku, Tokyo (JP)
(74) Representative: Beresford, Keith Denis Lewis

(56) References cited:
- EP-A- 93 077
- EP-A- 253 678
- EP-A- 335 751
- GB-A- 2 160 061
- GB-A- 2 185 166
- US-A- 3 872 245
- PATENT ABSTRACTS OF JAPAN, vol. 13, no. 558 (E-858), 12th December 1989; & JP-A-1 231 484 (HITACHI) 14 September 1989
- PATENT ABSTRACTS OF JAPAN, vol. 12, no. 486 (E-695), 19th December 1988; & JP-A-63 200 679 (HITACHI LTD) 18 August 1988
- PATENT ABSTRACTS OF JAPAN, vol. 13, no. 317 (E-789), 19th July 1989; & JP-A-1 086 677 (OLYMPUS) 31 March 1989

## Description

### BACKGROUND OF THE INVENTION

### Field of the Invention

5 The present invention is related to the photoelectric conversion apparatus, particularly to apparatus comprising a photoelectric conversion sensor unit having a plurality of photoelectric conversion sensors, driving signal generating means for outputting a control signal for a photoelectric converting operation of the photoelectric conversion sensor unit and scanning means for outputting a control signal to output a photoelectrically converted signal from said photoelectric conversion sensor unit.

### Related Background Art

Among known photoelectric conversion apparatus, there are apparatus which require a pixel resetting operation because electric charge remains in each pixel.

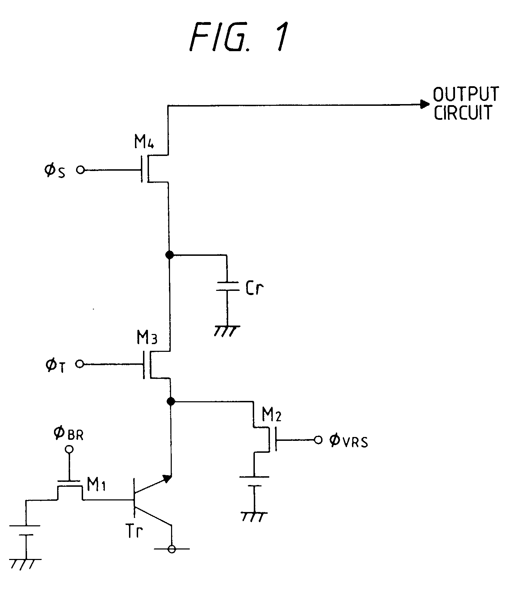

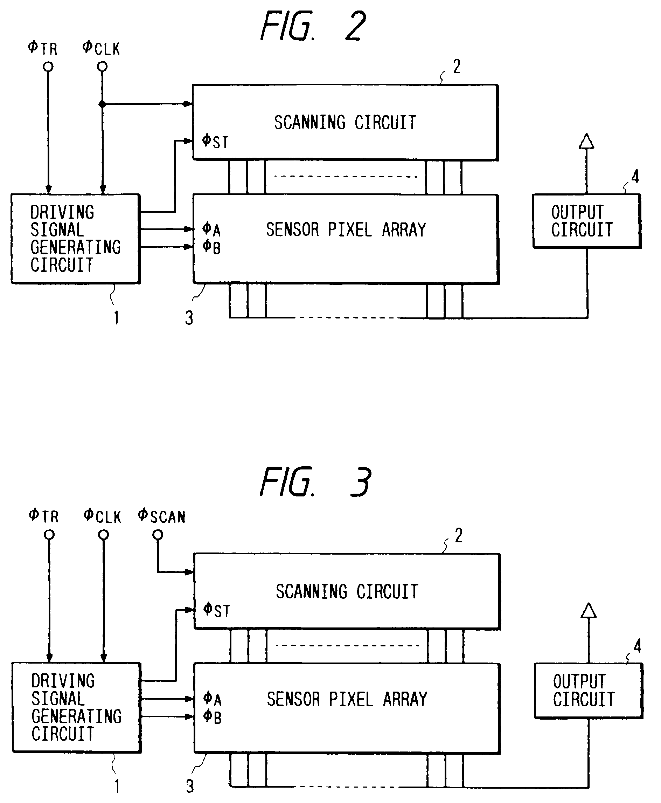

Fig. 1 is an equivalent circuit diagram to indicate one sensor pixel of photoelectric conversion apparatus and Fig. 2 is the schematic block diagram of photoelectric conversion apparatus.

As shown in Fig. 1, one sensor pixel is composed of a bipolar photoelectric conversion sensor Tr, storage condenser Cr to store the signal from photoelectric conversion sensor Tr, MOS transistors M1 and M2 which reset the base area and emitter area of photoelectric conversion sensor Tr, MOS transistor M3 which transmits the electric charge to storage condenser Cr and resets it and MOS transistor M4 for output which outputs the electric charge stored in the storage condenser Cr. The sign øs represents the scanning signal of MOS transistor M4 for output, øBR, øVRS and øT are signals for driving and resetting MOS transistors M1, M2 and M3.

In Fig. 2, said sensor pixels are arranged on the sensor pixel array 3 and signals øBR, øVRS and øT for driving and resetting are generated by the reset signals øA and øB coming from driving signal generating circuit 1. Scanning signal øS is generated by the scanning circuit 2. Driving signal generating circuit 1 is engaged by the trigger signal øTR and basic action clock signal øCLK and scanning circuit 2 is engaged by the basic action clock signal øCLK and start signal øST. Signals coming from sensor pixel array 3 are output through output circuit 4.

However with the aforesaid photoelectric conversion apparatus, there have been such problems that, for example, when the frequency of basic operation clock signal øCLK is raised in order to increase the signal output frequency, the signals øBR, øVRS and ør for driving and resetting are shortened proportionately and the reset time becomes shorter than the required reset time and it has an undesirable effect on the photoelectric characteristics of the system.

EP-A-0093077 discloses a CCD camera in which CCD elements are read out at a rate set by a first clock, for exposure control, and the signals are shifted to an output at a rate set by a second clock for compatibility with apparatus receiving the output. The second clock is switchable between a slow rate for video output and a fast rate for dumping unwanted CCD outputs. See also JP-A-63 200 679 for reset pulse management in CCDs.

### SUMMARY OF THE INVENTION

The present invention provides a photoelectric conversion apparatus as set out in claims 1 and 2. Optional features are set out in the remaining claims.

The photoelectric conversion apparatus embodying the present invention enables the control of photoelectric conversion operation such as storage or resetting action of photoelectric conversion sensor unit and the output operation to output the photoelectrically converted signal from the photoelectric conversion sensor unit at a frequency which can be arbitrarily set, since a clock signal input to said scanning means and a clock signal input to the signal generating means have frequencies which can be set independently.

Preferably there is provided means for receiving either one of the clock signal input into the signal generating means and the clock signal input into the scanning means and a signal providing the correlation between the received clock signal and the other clock signal and for generating the other clock signal.

This enables the control of photoelectric conversion operation such as storage operation and resetting operation of photoelectric conversion sensor unit and the output operation to output the photoelectrically converted signal from the photoelectric conversion sensor unit at a frequency which can be arbitrarily set and also enables the generation, upon receipt of either the clock signal input into the signal generating means or the clock signal input into the scanning means, the other clock signal.

Preferably the frequency of the clock signal input into the scanning means is changed by controlling a signal width of a trigger signal input into the signal generating means.

Photoelectric conversion apparatus of the present embodiment enables the individual control of photoelectric converting operation of photoelectric conversion sensor unit, such as storage operation, resetting operation etc. and the output operation to output a photoelectrically converted signal from the photoelectric conversion sensor unit at a frequency which can be arbitrarily set, by changing the frequency of clock signal input into the scanning means by controlling the signal width of the trigger signal input into the signal generating means.

Other optional features and characteristics of the present invention shall be made evident by the drawings and specifications given below.

### BRIEF DESCRIPTION OF THE DRAWINGS

Fig. 1 is the equivalent circuit diagram to show a sensor pixel of photoelectric conversion device and Fig. 2 is the schematic block diagram of the photoelectric conversion apparatus;
Fig. 3 is the schematic block diagram to show the composition of Embodiment 1 of the photoelectric conversion apparatus of the present invention and Fig. 4 is the timing chart to explain the performance of the photoelectric conversion apparatus;
Fig. 5 is the schematic block diagram of the Embodiment 2 of the photoelectric conversion apparatus of the present invention and Fig. 6 is the timing chart to explain the performance of the photoelectric conversion apparatus;
Fig. 7 is the schematic block diagram of the Embodiment 3 of the photoelectric conversion apparatus of the present invention and Fig. 8 is the timing chart to explain the performance of such photoelectric conversion apparatus;
Fig. 9 is the schematic block diagram of Embodiment 4 of the photoelectric conversion apparatus of the present invention and Fig. 10 is the timing chart to explain the performance of such photoelectric conversion apparatus;
Fig. 11 is the schematic drawing of the Embodiment 5 of the photoelectric conversion apparatus of the present invention; and
Fig. 12 is the timing chart to explain the performance of such photoelectric conversion apparatus.

### DETAILED DESCRIPTION OF THE PREFERRED EMBODIMENT

Hereunder are described the details of the Embodiment of the present invention with reference to the drawing.

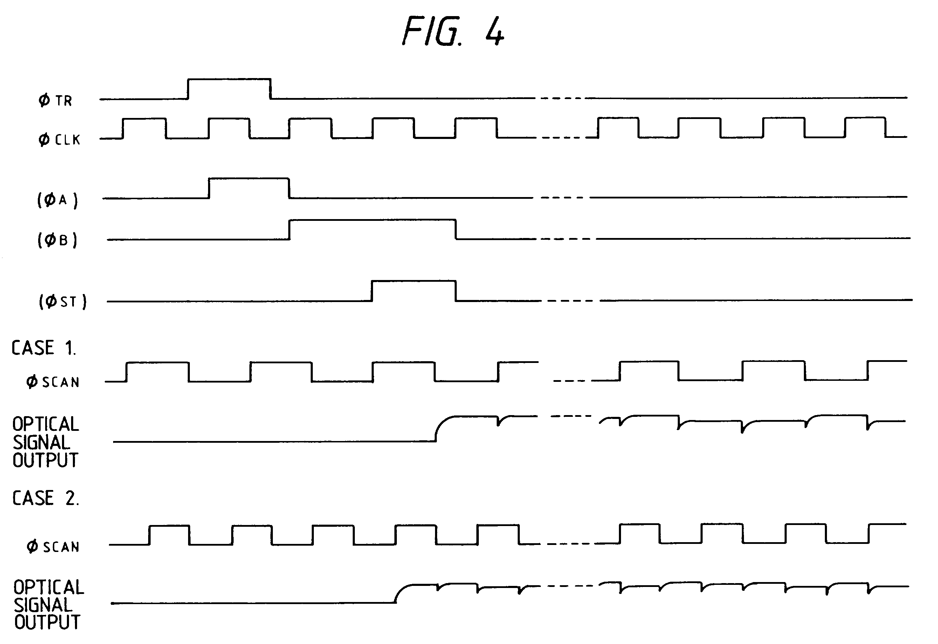

Fig. 3 is the schematic block diagram of the photoelectric conversion apparatus of the first embodiment and Fig. 4 is the timing chart to explain the performance of such photoelectric conversion apparatus.

In the embodiment described below, the same components to those indicated in Fig. 2 are given the same symbols and their explanations are omitted. The composition of the sensor pixel of the photoelectric conversion equipment of the present embodiment is identical to the sensor pixel explained with reference to Fig. 1.

As indicated in Fig. 3, in the case of the present embodiment, in addition to the trigger signal øTR and basic operation clock signal øCLK, the clock signal øSCAN for scanning is provided. Here, the "clock signal to be input into the driving signal generating means 1" mentioned in the present embodiment means this basic operation clock signal øCLK, and "clock signal to be input into scanning means" means this clock signal øSCAN for scanning. The same applies to the embodiment 2 to be described later.

When trigger signal øTR and basic operation clock signal øCLK are input, reset signal øA, øB are generated at driving signal generation circuit and the start signal øST of the scanning circuit 2 is generated.

Here, the driving and resetting signals øBR, øVRS and ør to be generated by reset signals øA and øB must be present during a required period, and therefore trigger signal øTR and basic performance clock signal øCLK are constant clock signals.

When scanning clock signal øSCAN is input, scanning circuit 2 functions. Since scanning clock signal øSCAN and basic operation clock signal øCLK are independently input, it is possible to change the frequency of the optical signal, output synchronously with the scanning clock signal øSCAN, regardless of the basic operation clock signal øCLK as shown in Fig. 4. In the Figure, Case 1 shows the case when the frequency of scanning clock signal øSCAN is lower than that of the basic operation clock signal øCLK and Case 2 shows the case when the frequency of scanning clock signal øSCAN is equal to that of the basic operation clock signal øCLK.

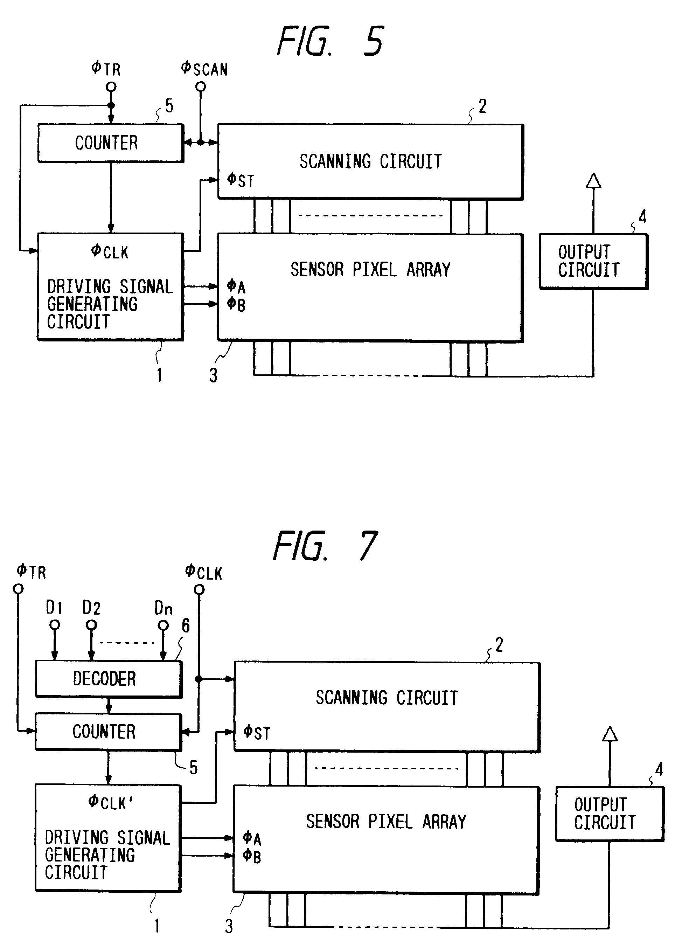

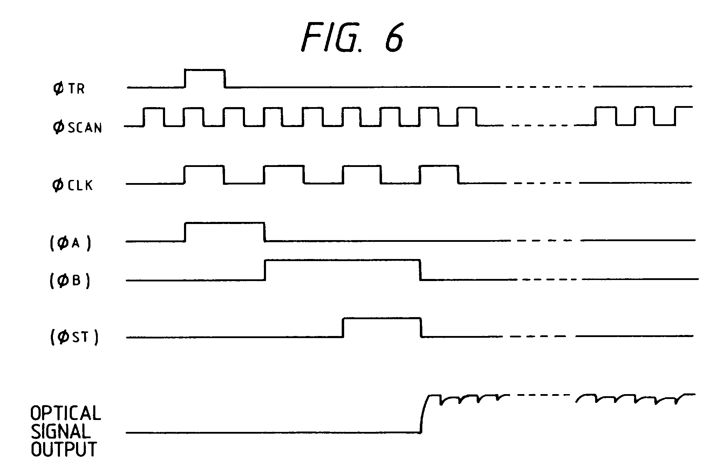

Fig. 5 is the schematic block diagram of embodiment 2 of the photoelectric conversion equipment of the present invention and Fig. 6 is the timing chart to explain the performance of this photoelectric conversion apparatus.

The component members same as those of Fig. 2 are given the same symbols and their explanations are omitted. The composition of the sensor pixel of the photoelectric conversion apparatus of the present embodiment is identical to that of the sensor pixel explained in Fig. 1

In the embodiment 1 stated above, three clock signals, namely, trigger signal øTR, basic operation clock signal øCLK and scanning clock signal øSCAN have been input but in the present embodiment, it is intended that the basic operation clock signal øCLK is generated from trigger signal øTR and scanning clock signal øSCAN. In other words, the counter 5 counts the number of oscillations of the scanning clock signal øSCAN occurring while the trigger signal øTR is at "H" level, and the basic operation clock signal øCLK is generated according to the count value.

Therefore, if the period when trigger signal øTR is held at "H" level is made constant, even if the frequency of scanning clock signal øSCAN changes, the same basic operation clock signal øCLK is always obtained by counting the number of oscillations of the scanning clock signal øSCAN which are input into the counter 5 within the "H" level period of trigger signal øTR. Therefore the desired clock signal for reset signal øA, øB and øST is always obtained. As the result, the signal output having the desired photoelectric characteristics can be obtained at the desired frequency.

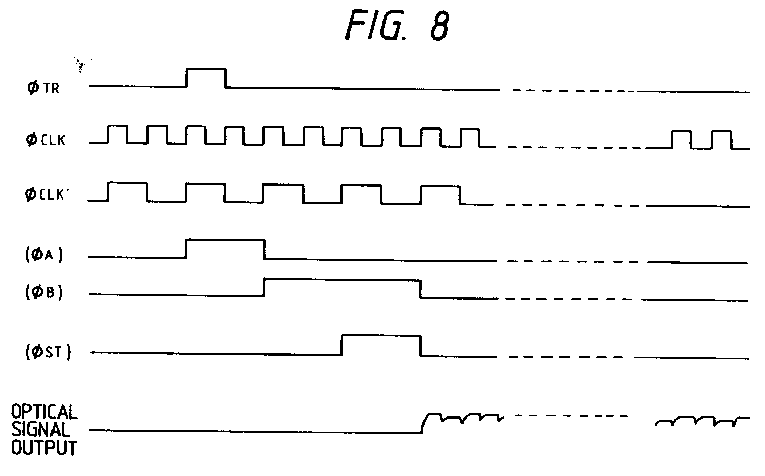

Fig. 7 is the schematic block diagram of the Embodiment 3 of the photoelectric conversion apparatus of the present invention and Fig. 8 is the timing chart to explain the performance of this photoelectric conversion apparatus.

In the present Embodiment, in addition to the trigger signal øTR and basic operation clock signal øCLK, the digital input D1 - Dn are input as shown in Fig. 7.

When trigger signal øTR and basic operation clock signal øCLK are input, digital input D1 - Dn are decoded through decoder 6 and the signals are sent to counter 5. At counter 5, based on such signals, the clock signal øCLK' to be used in the driving signal generation circuit 1 is generated. The timing chart of Fig. 8 assumes the case of D1 = 0, D2 = 1, D3 = D4 = ... = Dn V = 0 i.e., the case when the data given by digital input is "2".

At the driving signal generation circuit 1, reset signals øA, øB and øST are generated based on the clock signal øCLK' (in this Embodiment, "the clock signal to be input into the driving signal generation means" means this clock signal øCLK').

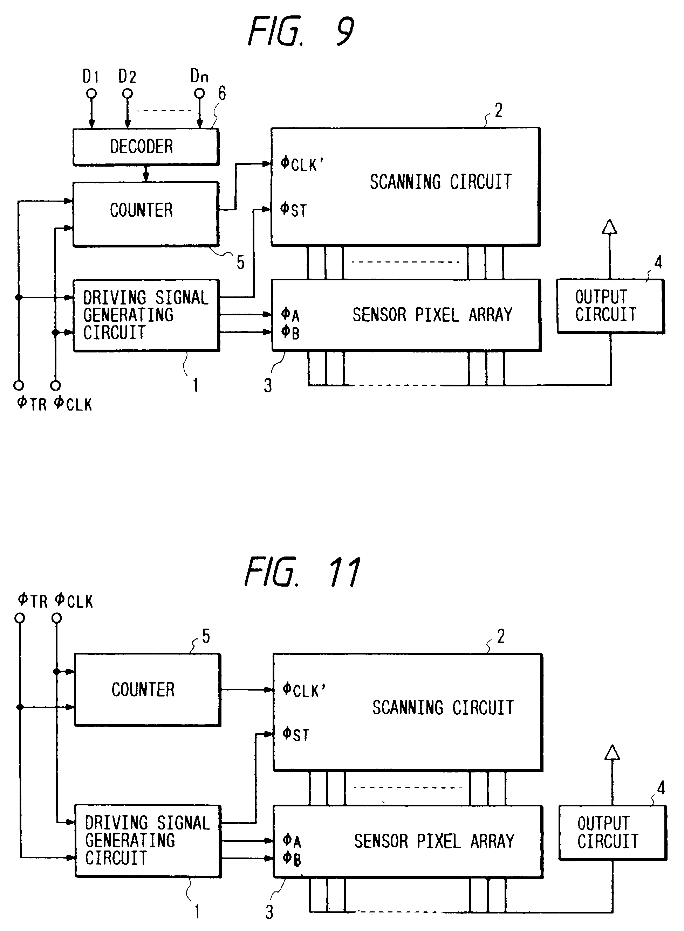

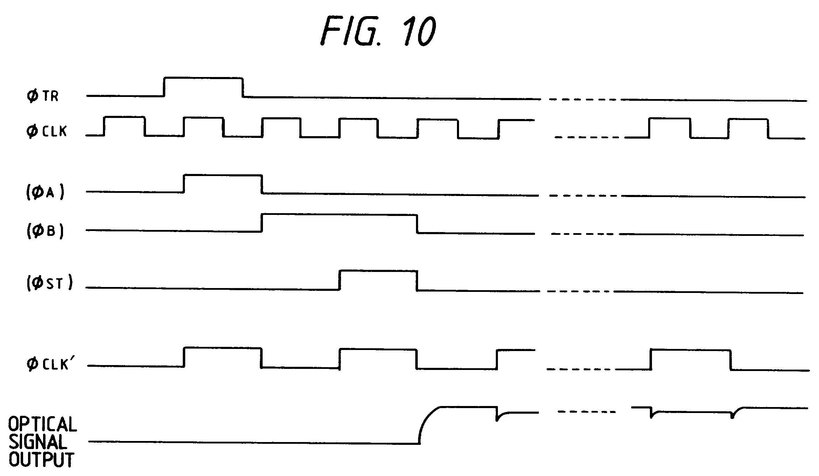

On the other hand, basic operation clock signal øCLK (in this Embodiment, "clock signal to be input into the scanning means" means this basic operation clock signal øCLK) is directly input into scanning circuit 2 and consequently the signal output frequency is determined by the frequency of basic operation clock signal øCLK. Here, even when the basic operation clock signal øCLK is made at high speed and signal output frequency is set at high level, it is possible to set the frequency of clock signal øCLK' at the desired level by changing the value of digital input D1 - Dn and desired photoelectric characteristics are obtained from each sensor pixel. In Fig. 7, basic operation clock signal øCLK is used for scanning circuit 2 and clock signal øCLK' is used for driving signal generation circuit 1 but as shown in Fig. 9 and Fig. 10, the similar effect is obtained when the connection is reversed and basic operation clock signal øCLK is used for driving signal generation circuit 1 (that is, the basic operation clock signal øCLK is used as the "clock signal to be input into the driving signal generating means") and clock signal øCLK' is used for the scanning circuit 2 (there is, the clock signal øCLK' is used as the "clock signal to be input into scanning means").

As described in detail as above, according to the photoelectric conversion apparatus of the present Embodiment, by independently setting the frequencies of the clock signal to be input into the driving signal generating means and the clock signal to be input into scanning means, the photoelectric converting action such as storage operation and resetting operation of photoelectric conversion sensor unit on the one hand, and the output operation to output from the photoelectric conversion sensor unit the signal obtained by photoelectric conversion on the other hand, can be controlled with frequencies which may be set arbitrarily.

The photoelectric conversion apparatus of the present embodiments provide means which receives: either the clock signal input into the driving signal generating means or the clock signal input into the scanning means; and a further signal providing the correlation between the input clock signal and the other clock signal, and thereby generates the other clock signal. In this way the photoelectric conversion operation of the photoelectric conversion sensor unit, such as storage operation and resetting operation, and the output operation to output from the photoelectric conversion sensor unit the signal obtained by photoelectric conversion, can be controlled by frequencies which can be arbitrarily set and even so, either the clock signal input into the driving signal generating means or the clock signal input into the scanning means can be generated from other clock signal instead of being separately input.

Hereunder is described in detail the embodiment 5 of the present invention with reference to the drawings.

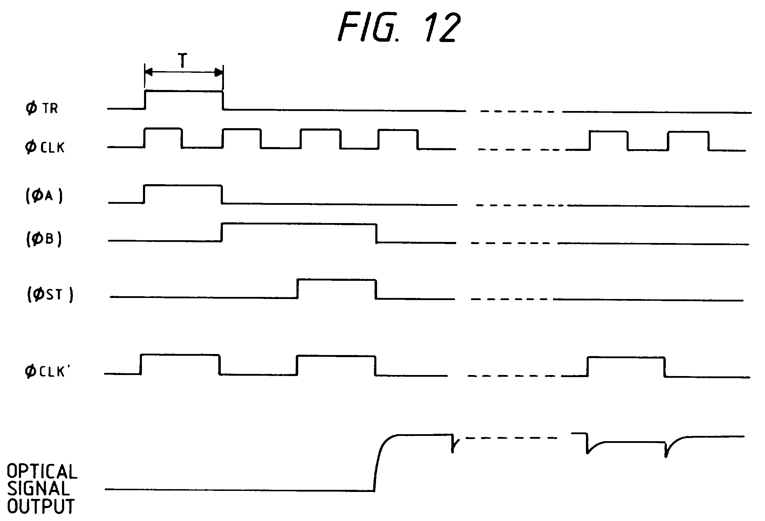

Fig. 11 is the schematic block diagrams of an Embodiment of the photoelectric conversion apparatus of the present invention and Fig. 12 is the timing chart to explain the performance of such photoelectric conversion apparatus.

As shown in Fig. 11, when trigger signal øTR and basic operation clock signal øCLK are input, the number of oscillations of basic operation clock signal øCLK during the period when trigger signal øTR is at H level (in the case of the circuit of the present Embodiment, positive logic wherein "1" is H level and "0" is L level is employed but it may be a negative logic) is counted by counter 5 and based on such data, clock signal øCLK' is generated. Basic operation clock signal øCLK is input into the driving signal generation circuit 1 and there the reset signal øA, øB and start signal øST of scanning circuit 2 are generated. Clock signal øCLK' is input into the scanning circuit 2.

Frequency of basic operation clock signal øCLK is set irrespective of the change of signal width T of trigger signal øTR (width of the duration when trigger signal øTR is at H level) and as stated above, clock signal øCLK' can be set arbitrarily by the control of signal width T of trigger signal øTR. As the result, the frequency of the scanning signal øSCAN to be generated based on the clock signal øCLK' can be set independently from the frequency of the driving and resetting signals øBR, øVRS, øT which are generated based on the basic operation clock signal øCLK.

As explained in detail in the above, according to the photoelectric conversion device of the present Embodiment the photoelectric conversion operation of the photoelectric conversion sensor unit, such as storage operation and resetting operation, and the output operation to output from the respective photoelectric conversion sensors of photoelectric conversion sensor unit the signal obtained by photoelectric conversion can be controlled independently with frequencies which can be arbitrarily set.

## Claims

1. Photoelectric conversion apparatus comprising:
a photoelectric conversion sensor unit (3) having a plurality of photoelectric conversion sensors;
signal generating means (1) for generating a reset signal (øA, øB), for controlling resetting of said photoelectric conversion sensors, from an input clock signal; and
scanning means (2) for scanning the outputs of the photoelectric conversion sensors in accordance with an input clock signal,
characterised by means for inputting independently of each other (i) the clock signal input to the signal generating means and (ii) the clock signal input to the scanning means, thereby enabling the frequencies of the clock signal input to the signal generating means and the clock signal input to the scanning means to be set independently of each other.

2. Photoelectric conversion apparatus comprising:
a photoelectric conversion sensor unit (3) having a plurality of photoelectric conversion sensors;
signal generating means (1) for generating a reset signal (øA, øB), for controlling resetting of said photoelectric conversion sensors, from an input clock signal; and
scanning means (2) for scanning the outputs of the photoelectric conversion sensors in accordance with an input clock signal,
characterised by means (5) for receiving: one of the said clock signals; and a further input for setting the frequency of the other of the said clock signals, and for generating the other of the said clock signals therefrom, thereby enabling the ratio of the frequencies of the said clock signals to be varied.

3. Apparatus according to claim 2 in which said means (5) for receiving and generating comprises a counter for counting the said one of the said clock signals.

4. Apparatus according to claim 2 or claim 3 in which the further input comprises a digital signal (D1 to Dn).

5. Apparatus according to claim 2 or claim 3 in which the further input comprises a signal the width of which is used to set the frequency of the said other one of the said clock signals.

6. Apparatus according to any one of claims 2 to 5 in which the said one of the said clock signals is the clock signal input to the signal generating means (1) and the said other of the said clock signals is the clock signal input to the scanning means (2).

7. Apparatus according to any one of claims 2 to 5 in which the said one of the said clock signals is the clock signal input to the scanning means (2) and the said other one of the said clock signals is the clock signal input to the signal generating means (1).

8. Apparatus according to any one of the preceding claims in which the time used for reset of a said photoelectric conversion sensor is set by the reset signal and is thereby set by the frequency of the clock signal input to the signal generating means (1).

9. Apparatus according to any one of the preceding claims in which the frequency of the clock signal input to the scanning means is variable.

10. Photoelectric conversion apparatus according to any one of the preceding claims in which said photoelectric conversion sensor unit further has a memory means for storing the photoelectrically converted signals of said photoelectric conversion sensors.

11. Photoelectric conversion apparatus according to claim 10, wherein said memory means comprises a capacitor.

## Patentansprüche

1. Photoelektrischer Wandler mit
einer photoelektrischen Wandler-Sensoreinheit (3) mit einer Vielzahl von photoelektrischen Wandler-Sensoren,
einer Signalerzeugungseinrichtung (1) zur Erzeugung eines zur Steuerung des Rücksetztens der photoelektrischen Wandler-Sensoren dienenden Rücksetz-Signals (øA, øB) aus einem Eingangs-Taktsignal, und
einer Abtasteinrichtung (2) zur Abtastung der Ausgänge der photoelektrischen Wandler-Sensoren entsprechend einem Eingangs-Taktsignal,
**gekennzeichnet durch**
eine Einrichtung zur voneinander unabhängigen Eingabe (i) des der Signalerzeugungseinrichtung zugeführten Taktsignals und (ii) des der Abtasteinrichtung zugeführten Taktsignals, wodurch ein voneinander unabhängiges Einstellen der Frequenzen des der Signalerzeugungseinrichtung zugeführten Taktsignals und des der Abtasteinrichtung zugeführten Taktsignals ermöglicht wird.

2. Photoelektrischer Wandler mit
einer photoelektrischen Wandler-Sensoreinheit (3) mit einer Vielzahl von photoelektrischen Wandler-Sensoren,
einer Signalerzeugungseinrichtung (1) zur Erzeugung eines zur Steuerung des Rücksetztens der photoelektrischen Wandler-Sensoren dienenden Rücksetz-Signals (øA, øB) aus einem Eingangs-Taktsignal, und
einer Abtasteinrichtung (2) zur Abtastung der Ausgänge der photoelektrischen Wandler-Sensoren entsprechend einem Eingangs-Taktsignal,
**gekennzeichnet durch**
eine Einrichtung (5) zum Empfang eines der Taktsignale, und einen weiteren Eingang zum Einstellen der Frequenz des anderen der Taktsignale und zum Erzeugen des anderen der Taktsignale daraus, wodurch eine Veränderung des Verhältnisses der Frequenzen der Taktsignale ermöglicht ist.

3. Wandler nach Anspruch 2, wobei die Einrichtung (5) zum Empfang und zum Erzeugen einen Zähler zum Zählen des einen der Taktsignale aufweist.

4. Wandler nach Anspruch 2 oder 3, wobei der weitere Eingang ein digitales Signal (D1 bis Dn) aufweist.

5. Wandler nach Anspruch 2 oder 3, wobei der weitere Eingang ein Signal aufweist, dessen Signalbreite zum Einstellen der Frequenz des anderen der Taktsignale verwendet wird.

6. Wandler nach einem der Ansprüche 2 bis 5, wobei das eine der Taktsignale das der Signalerzeugungseinrichtung (1) zugeführte Taktsignal ist und das andere der Taktsignale das der Abtasteinrichtung (2) zugeführte Taktsignal ist.

7. Wandler nach einem der Ansprüche 2 bis 5, wobei das eine der Taktsignale das der Abtasteinrichtung (2) zugeführte Taktsignal ist und das andere der Taktsignale das der Signalerzeugungseinrichtung (1) zugeführte Taktsignal ist.

8. Wandler nach einem der vorherigen Ansprüche, wobei die zum Rücksetzten des photoelektrischen Wandler-Sensors genützte Zeit durch das Rücksetz-Signal eingestellt wird und dadurch durch die Frequenz des der Signalerzeugungseinrichtung (1) zugeführten Taktsignals eingestellt ist.

9. Wandler nach einem der vorherigen Ansprüche, wobei die Frequenz des der Abtasteinrichtung zugeführten Taktsignals veränderbar ist.

10. Photoelektrischer Wandler nach einem der vorhergehenden Ansprüche, wobei die photoelektrische Wandler-Sensoreinheit ferner eine Speichereinrichtung zum Speichern der photoelektrisch umgewandelten Signale der photoelektrischen Wandler-Sensoren aufweist.

11. Photoelektrischer Wandler nach Anspruch 10, wobei die Speichereinrichtung einen Kondensator aufweist.

## Revendications

1. Appareil de conversion photoélectrique comprenant :
un module capteur (3) de conversion photoélectrique comportant une pluralité de capteurs de conversion photoélectrique ;
un moyen (1) de production de signal destiné à produire un signal (φA, φB) de restauration, pour commander la restauration desdits capteurs de conversion photoélectrique, à partir d'un signal d'horloge d'entrée ; et
un moyen (2) de balayage destiné à balayer les sorties des capteurs de conversion photoélectrique en fonction d'un signal d'horloge d'entrée ;
caractérisé par un moyen destiné à entrer, indépendamment l'un de l'autre, (i) le signal d'horloge entré dans le moyen de production de signal et (ii) le signal d'horloge entré dans le moyen de balayage, en permettant ainsi de fixer indépendamment l'une de l'autre les fréquences du signal d'horloge entré dans le moyen de production de signal et du signal d'horloge entré dans le moyen de balayage.

2. Appareil de conversion photoélectrique comprenant :
un module capteur (3) de conversion photoélectrique comportant une pluralité de capteurs de conversion photoélectrique ;
un moyen (1) de production de signal destiné à produire un signal (φA, φB) de restauration destiné à commander la restauration desdits capteurs de conversion photoélectrique, à partir d'un signal d'horloge d'entrée ; et
un moyen (2) de balayage destiné à balayer les sorties des capteurs de conversion photoélectrique en fonction d'un signal d'horloge d'entrée,
caractérisé par un moyen (5) destiné à recevoir : l'un desdits signaux d'horloge ; et une entrée supplémentaire destinée à fixer la fréquence de l'autre desdits signaux d'horloge, et destinée à produire l'autre desdits signaux d'horloge à partir de celle-ci, en permettant ainsi de faire varier le rapport des fréquences desdits signaux d'horloge.

3. Appareil selon la revendication 2, dans lequel ledit moyen (5) destiné à recevoir et à produire comprend un compteur destiné à compter ledit un desdits signaux d'horloge.

4. Appareil selon la revendication 2 ou la revendication 3, dans lequel l'entrée supplémentaire comprend un signal numérique (D1 à Dn).

5. Appareil selon la revendication 2 ou la revendication 3, dans lequel l'entrée supplémentaire comprend un signal dont la largeur est utilisée pour fixer la fréquence dudit autre desdits signaux d'horloge.

6. Appareil selon l'une quelconque des revendications 2 à 5, dans lequel ledit un desdits signaux d'horloge est le signal d'horloge entré dans le moyen (1) de production de signal et ledit autre desdits signaux d'horloge est le signal d'horloge entré dans le moyen (2) de balayage.

7. Appareil selon l'une quelconque des revendications 2 à 5, dans lequel ledit un desdits signaux d'horloge est le signal d'horloge entré dans le moyen (2) de balayage et ledit autre desdits signaux d'horloge est le signal d'horloge entré dans le moyen (1) de production de signal.

8. Appareil selon l'une quelconque des revendications précédentes, dans lequel le temps utilisé pour restaurer l'un desdits capteurs de conversion photoélectrique est fixé par le signal de restauration et est ainsi fixé par la fréquence du signal d'horloge entré dans le moyen (1) de production de signal.

9. Appareil selon l'une quelconque des revendications précédentes, dans lequel la fréquence du signal d'horloge entré dans le moyen de balayage est variable.

10. Appareil de conversion photoélectrique selon l'une quelconque des revendications précédentes, dans lequel ledit module capteur de conversion photoélectrique comporte en outre un moyen formant mémoire destiné à mémoriser les signaux convertis photoélectriquement desdits capteurs de conversion photoélectrique.

11. Appareil de conversion photoélectrique selon la revendication 10, dans lequel ledit moyen formant mémoire comprend un condensateur.
